(19) Europäisches Patentamt
European Patent Office
Office européen des brevets

(11) EP 3 503 611 B1

(12) **FASCICULE DE BREVET EUROPEEN**

(45) Date de publication et mention
de la délivrance du brevet:
**02.12.2020   Bulletin 2020/49**

(21) Numéro de dépôt: **18215515.0**

(22) Date de dépôt: **21.12.2018**

(51) Int Cl.:
**H04W 16/18** (2009.01)     **H04L 12/751** (2013.01)

(54) **PROCÉDÉ POUR GÉNÉRER DES CONFIGURATIONS DE RÉSEAUX ET LES RÉSEAUX ASSOCIÉS**

VERFAHREN ZUR ERZEUGUNG VON NETZWERKKONFIGURATIONEN, UND ENSPRECHENDE NETZWERKE

METHOD FOR GENERATING NETWORK CONFIGURATIONS AND ASSOCIATED NETWORKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **21.12.2017   FR 1701352**

(43) Date de publication de la demande:
**26.06.2019   Bulletin 2019/26**

(73) Titulaire: **Thales**
**92400 Courbevoie (FR)**

(72) Inventeurs:
• **PICHET, Jérôme**
**49309 Cholet (FR)**
• **MEVEL, Bastien**
**92230 Gennevilliers (FR)**
• **CAUDRON, Maxime**
**49309 Cholet (FR)**
• **BARBIER, Gabriel**
**49309 Cholet (FR)**

(74) Mandataire: **Marks & Clerk France**
**Immeuble "Visium"**
**22, avenue Aristide Briand**
**94117 Arcueil Cedex (FR)**

(56) Documents cités:
**WO-A2-2008/089451     US-A1- 2017 310 550**

• **OPPERMANN FELIX JONATHAN ET AL: "Automatic protocol configuration for dependable internet of things applications", 2015 IEEE 40TH LOCAL COMPUTER NETWORKS CONFERENCE WORKSHOPS (LCN WORKSHOPS), IEEE, 26 octobre 2015 (2015-10-26), pages 742-750, XP032835525, DOI: 10.1109/LCNW.2015.7365923**

EP 3 503 611 B1

**Description**

L'invention concerne un procédé pour générer des configurations de réseaux radio et les réseaux radio associés. Les réseaux radio sont définis comme étant des ensembles de radios qui partagent un ensemble de paramètres physiques, tels que les fréquences de fonctionnement, les adresses internet IP, etc., ces paramètres leur permettant de communiquer entre elles. Les paramètres de topologie ainsi générés seront par exemple chargés au niveau de chacun des postes radios afin d'optimiser le nombre de radios utilisées pour des services souhaités, le nombre de fréquences, etc. Un exemple se trouve dans US 2017/310550.

L'invention s'applique dans le cadre de réseaux radio qui sont susceptibles de prendre en compte des nouvelles formes d'onde et de nouvelles radios qui n'étaient pas nécessairement programmées à la spécification du système.

Les paramètres d'un réseau radio sont initialisés en tenant compte des caractéristiques des formes d'onde et des caractéristiques des équipements connus lors de la phase de démarrage.

L'art antérieur décrit différentes méthodes permettant de planifier des réseaux radio en fonction des applications demandées.

Par exemple, il est connu de définir préalablement au démarrage d'une mission les règles permettant de calculer les réseaux et de coder ces règles dans une application et, en utilisant une fonction de transfert ayant connaissance des capacités des formes d'onde, de définir une topologie de réseau. Malgré les avantages qu'elle procure, cette méthode présente les inconvénients suivants :

- Elle induit des coûts importants de prise en charge des formes d'onde,
- Pour générer de nouvelles règles, la structure de la fonction de transfert doit être connue,
- Elle est faiblement évolutive, la structure de la fonction de transfert ne permettant pas une prise en charge de la forme d'onde ou d'équipements sans que le développeur du module d'extension, ou plugin forme d'onde, ne soit conduit à modifier la fonction de transfert, ou encore que le développeur du plugin ne puisse avoir accès aux spécifications de la forme d'onde,
- Elle ne permet que difficilement de prendre en compte des fichiers de personnalisation propre à un client utilisateur,
- Elle repose sur un développement spécifique ne bénéficiant pas de l'utilisation d'une base reconnue et nécessite des coûts de formation et de maintenance croissants.

Le procédé selon l'invention utilise la technique de programmation par contraintes qui est bien connue de l'homme du métier et ne sera pas détaillée afin de définir des configurations de réseaux radio et les réseaux radio associés.

L'invention concerne un procédé pour définir une topologie de réseaux utilisant plusieurs postes radios, lesdits postes radios communicant via un canal de communication, caractérisé en ce que l'on définit des besoins en communication, chaque forme d'onde transmet ses contraintes via une interface, lesdites contraintes sont transformées en valeurs numériques et transmises à un solveur de contraintes implémenté sur un processeur, ledit solveur de contraintes prend en compte l'ensemble des radios disponibles, l'ensemble des formes d'ondes disponibles, et l'ensemble des services pour une forme d'onde et parcourt un arbre de solutions afin de définir une topologie de réseau comprenant un ensemble de postes radios satisfaisant les besoins en communication et des paramètres de fonctionnement pour chacun desdits postes, lesdits paramètres de fonctionnement étant transmis vers les postes radios afin de permettre leur programmation.

Le procédé prend par exemple en compte les besoins en communication, la capacité pour chacun des postes radios du réseau, lesdites valeurs étant transformées en valeurs numériques, ledit solveur parcourant un arbre de solution en termes de réseaux d'allocation de postes et s'arrêtant dès qu'une solution satisfaisant les contraintes données est trouvée.

Le procédé peut aussi comporter les étapes suivantes :

R représentant l'ensemble des radios disponibles, F l'ensemble des formes d'ondes disponibles, $S_f$ l'ensemble des services pour une forme d'onde,

soit X l'ensemble des variables des problèmes, contenant les services susceptibles d'être activés pour une radio r, avec $x_{r,s} \in X$, correspondant à l'activation d'un service s d'une radio r et un service est lié à une unique forme d'onde $f$,

On segmente l'ensemble des variables X sur l'ensemble des formes d'onde de la manière suivante : $X = \bigcup_{f \in F} X_f$,

Sur réception d'une nouvelle forme d'onde à prendre en compte, l'ensemble X s'exprime de la manière suivante :

$$X = X_{f_{nouvelle}} \cup \bigcup_{f \in F} X_f \ .$$

On prend en compte $P_f^{max,f}$ le maximum de radios par forme d'onde, s'exprimant sous la forme

$$\#\{\bigcup_{r\in R, s\in S_f} x_{r,s} \mid x_{r,s} \neq 0\} \leq P_f^{max,f} \text{ , } S_f \text{ l'ensemble de services pour une forme d'onde.}$$

On prend en compte le nombre maximum de radios par réseau

$$\forall d \in D_s, \#\{\bigcup_{r\in R, s\in S_f} x_{r,s} \mid x_{r,s} = d\} \leq P_f^{max,s} ,$$

Soit $R_{Col}$ l'ensemble des radios devant communiquer ensemble, on utilise la relation:

$$\forall r_1, r_2 \in R_{CoI}, \exists f \in F, \exists s \in S_f \mid x_{r_1,s} = x_{r_2,s}$$

Le solveur utilise ces relations et génère la topologie de réseau de la manière suivante:

si $\exists r_1, r_2 \in R \mid \forall f \in F, \forall s \in S_f, \forall x_{r,s} \in R, x_{r_1,s} = x_{r_2,s}$, alors ces deux radios interviennent au sein du même réseau avec le service s,

Si $\forall f \in F, \forall s \in S_f, \forall r \in R, \forall x_{r,s} \in X_f, x_{r,s} = 0$, le service n'est pas mis en oeuvre.

Si $\exists r \in R \mid \forall f \in F, \forall s \in S_f, \forall x_{r,s} \in R, x_{r,s} = 0$, la radio $r$ ne sera pas utilisée.

Selon une variante de réalisation, le solveur de contraintes parcourt l'arbre de solution pendant un intervalle de temps limité.

Selon une autre variante de réalisation, le procédé prend en compte des fichiers de personnalisation permettant de prendre en charge une préférence pour des domaines de fréquence de fonctionnement, par exemple très haute fréquence ou ultra haute fréquence.

L'invention concerne aussi un système permettant de générer un réseau comportant plusieurs stations radios configurées en utilisant les paramètres de fonctionnement obtenus par la mise en œuvre du procédé selon l'invention.

Le système comporte par exemple un dispositif décentralisé comprenant un processeur programmé pour exécuter les étapes du procédé selon l'invention, l'exécution d'un solveur de contraintes implémenté sur ledit processeur prenant en entrée un ensemble de données, une base de données se présentant sous la forme d'une matrice exprimant les besoins en communication, les lignes de la matrice représentant les interfaces des radios et les colonnes des services disponibles pour l'ensemble des radios du système, une radio comprenant des moyens de communication et une interface apte à recevoir les paramètres de configuration en fonction des paramètres générés par le dispositif décentralisé.

D'autres caractéristiques et avantages de la présente invention apparaîtront mieux à la lecture de la description d'exemples de réalisation annexée des figures qui représentent

- La figure 1, un exemple d'architecture du système selon l'invention,
- La figure 2, un organigramme illustrant les étapes du procédé.

L'objectif du procédé selon l'invention est de générer des configurations de réseaux radios, comportant la programmation des radios ou postes radios qui seront retenues pour satisfaire des besoins en communication. Pour cela, le procédé selon l'invention présente un nouvel outil qui prend en compte des listes hiérarchisées de radios, ainsi que des besoins en communications entre diverses radios. Les besoins en communication sont, par exemple, la communication de la voix, la communication de données vidéo, le transfert de données, etc. A partir de ces besoins en communication et des capacités des radios qui dépendent de leur type et du protocole de données utilisées, dénommé forme d'onde, le procédé va déduire la topologie du réseau et ses paramètres (i.e., adresses IP, débit de données, tables de routage,...). Ces données seront ensuite transmises aux différentes radios afin de les programmer et satisfaire les besoins en communication exprimés ou toute autre contrainte. La transmission des paramètres permettant de programmer les postes radios peut se faire, en utilisant des liens de communications sans fil, ou en utilisant tout autre support matériel pouvant stocker les paramètres d'initialisation et de programmation du fonctionnement de radios.

L'intégration d'une nouvelle forme d'onde peut se traduire par l'ajout d'un ou de plusieurs services au niveau d'une ou de plusieurs radios constituant un réseau.

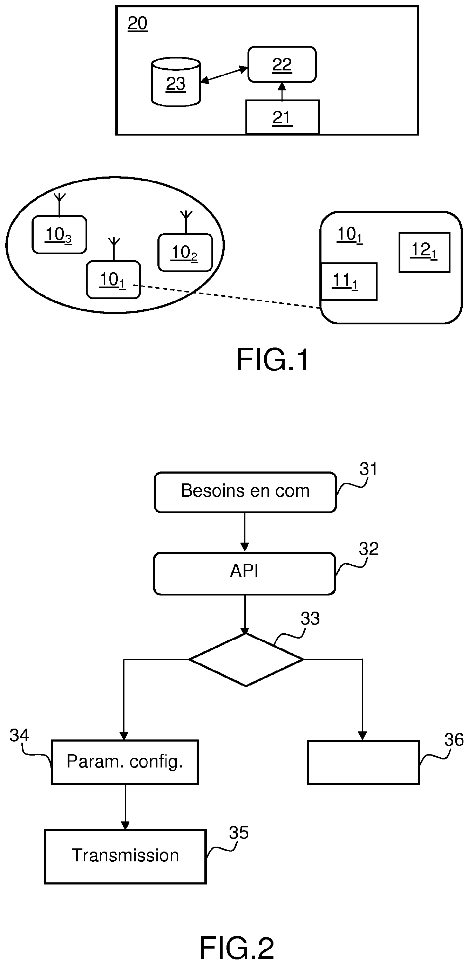

Le système selon l'invention illustré à la figure 1 comporte plusieurs radios $10i=10_1$, $10_2$, $10_3$, présentant chacune leurs propres caractéristiques de fonctionnement et un dispositif décentralisé 20 programmé pour exécuter les étapes du procédé selon l'invention.

Le dispositif décentralisé ou dispositif maître 20 comprend par exemple une interface de communication 21, un processeur 22 programmé pour exécuter les étapes du procédé selon l'invention, notamment l'exécution d'un solveur de contraintes qui prend en compte des données, une base de données 23 se présentant sous la forme d'une matrice exprimant les besoins en communication dont les lignes représentent les interfaces des radios et les colonnes les services disponibles par exemple pour toutes les radios du système. De cette façon, il est possible pour chaque radio $10i$ de retrouver les autres radios de son unité en adoptant une représentation arborescente. Par exemple, étant données une première radio à une interface et une deuxième radio à trois interfaces ayant respectivement trois et deux services, il y aura donc, [interface*services], (1*3 + (3*(2+1)) variables répertoriées dans une matrice de taille quatre*trois.

Une radio $10i$ comprend des moyens de communication $11i$ connus de l'homme du métier, une interface $12i$ apte à recevoir les paramètres pour une reconfiguration en fonction des paramètres générés par le contrôleur ou manager. Au sein du réseau, les radios communiquent entre elles en utilisant un canal de communication.

Pour mieux illustrer le problème technique résolu par l'invention, si deux radios doivent communiquer deux à deux, alors au moins une interface de chaque radio doit être affectée au même réseau via le même service. Chaque couple de radios devant échanger se voit affecter cette contrainte pour chacun de ses services sur toutes les interfaces. Toutes les interfaces radios affectées au même réseau doivent utiliser le même service.

Une autre contrainte peut être la taille maximale des réseaux à respecter. Cette capacité limite est une donnée liée au service utilisé.

La figure 2 illustre les étapes du procédé selon l'invention. L'expression du besoin en termes de communications est connue à l'initialisation du procédé, 31. Chaque forme d'onde et chaque équipement ou station fournit, 32, via une interface API standard, les contraintes inhérentes aux capacités des stations, par exemple, poste bi-voies ou monovoie, forme d'onde capable de traiter de la voix et de la donnée simultanément. De manière optionnelle, il est possible de prendre en compte des fichiers de personnalisation permettant de prendre en charge une préférence entre différentes solutions. Ces préférences seront adaptées en fonction de chaque utilisateur.

Les contraintes sont ensuite formalisées, 33, comme il va être détaillé ci-après, pour être remplacées par des valeurs numériques, seules à même d'être fournies en entrée du solveur de contraintes. Celui-ci parcourt l'arbre de solution en termes de réseaux et d'allocation de postes et s'arrête dès qu'une solution de configuration de réseau satisfaisant les contraintes est trouvée, 34. Les paramètres seront transmis aux postes radios qui sont retenus afin de les programmer et permettre de respecter les contraintes de communication définis pour une application donnée. Dans le cas contraire, 35, il continue la recherche de paramètres permettant la définition de réseaux satisfaisant les contraintes. L'arrêt du parcours de l'arbre de solution peut aussi être défini par un temps maximal imposé.

Nous allons décrire maintenant un exemple permettant d'affecter des radios à des services fournis par les formes d'ondes, afin de satisfaire des besoins en communications. L'intégration d'une nouvelle forme d'onde passera par l'ajout d'un ou de plusieurs services.

L'exemple donné à titre illustratif et nullement limitatif concerne une radio ayant un seul accès au canal de communication. L'activation d'un service s d'une radio r s'exprime par une variable $x_{r,s} \in X$, avec X l'ensemble de variables des problèmes. Un service est lié à une unique forme d'onde $f$.

Soit R représentant l'ensemble des radios disponibles, F l'ensemble des formes d'ondes disponibles, $S_f$ l'ensemble des services pour une forme d'onde $f$. Quelque soit une radio r appartenant à l'ensemble R, une forme d'onde appartenant à l'ensemble des formes d'ondes et un service appartenant à l'ensemble $S_f$, le solveur va déduire qu'il existe ou non une solution, modélisée par les variables de X. De ces données peuvent être déduites les configurations radios de cette solution.

Le procédé met en œuvre un solveur par contraintes afin de générer des configurations de réseaux selon des étapes détaillées ci-après.

Le procédé segmente l'ensemble des variables X sur l'ensemble des formes d'ondes de la manière suivante

$$X = \bigcup_{f \in F} X_f \, .$$

Lors de la réception d'une nouvelle forme d'onde à prendre en compte, l'ensemble X s'exprime de la manière suivante :

$$X = X_{f_{nouvelle}} \cup \bigcup_{f \in F} X_f \, .$$

Ce qui se traduit par l'union de l'ensemble des variables pour une nouvelle forme d'onde avec l'ensemble des variables associées aux formes d'ondes disponibles.

Ainsi, en considérant #R le nombre de radios dans un déploiement donné, #S le nombre de services associés à ce déploiement, le nombre total de variables contenues dans la matrice précitée est égal à #Rx#S. Ces variables seront prises en compte par le processeur du dispositif gestionnaire du réseau afin de définir les paramètres des radios qui vont être utilisées pour satisfaire les besoins de communication, une configuration optimale du réseau.

Le domaine des variables est un sous ensemble de $\mathbb{N}+$ et correspond aux réseaux possibles pour un service donné. Un service d'une radio non attribuable à cette radio se voit attribuer un domaine réduit au singleton {0}, ce qui correspond au fait que cette variable est hors de résolution, $\forall r \in R$, $\forall f \in F$, $\forall s \in S_f$, $x_{r,s} \in D_s$, avec $D_s$ le domaine des services.

Tous les services n'ont pas les mêmes capacités. A un service est associée une capacité qui est connue à l'initialisation. Si un service s a un nombre limité de participants $P_s^{max}$ et un nombre minimum de participants par réseau r, $P_{r,s}^{min}$, le cardinal des domaines représentant ce service doit être égal à $\frac{P_s^{max}}{P_{r,s}^{min}}$.

$$\forall f \in \mathsf{F}, \forall s \in \mathsf{S}_f, \#\mathsf{D}_s \leq \left\lceil \frac{P_s^{max}}{P_{r,s}^{min}} \right\rceil$$

De plus, on considère que l'intersection des domaines de variables correspondant à deux services différents est vide :

$$\forall f \in \mathsf{F}, \forall s_1, s_2, \mathsf{D}_{s_1} \cap \mathsf{D}_{s_2} = \varnothing$$

Le procédé va modéliser les contraintes selon des étapes détaillées ci-après.

On considère la prise en compte du maximum de participants par forme d'onde. Il faut s'assurer que le nombre de variables ayant des valeurs rattachées aux domaines de la forme d'onde soit inférieur au paramètre associé de la forme d'onde. D'un point de vue programmation par contraintes, les contraintes de comptage et arithmétique seront utilisées. L'objectif est de compter pour chaque valeur possible du domaine (rattachée à une forme d'onde), combien de variables obtiennent une de ces valeurs. Une fois cette donnée connue, l'inéquation sera satisfaite par une contrainte arithmétique. Formellement, cela s'exprime de la manière suivante : soit f une forme d'onde, $S_f$ son ensemble de services et $P_f^{max,f}$ le nombre maximum de participants pour une forme d'onde f, $\#\left\{ \bigcup_{r \in \mathsf{R}, s \in \mathsf{S}_f} x_{r,s} \mid x_{r,s} \neq 0 \right\} \leq P_f^{max,f}$.

On prend aussi en compte un nombre maximum de participants par réseau. Cette contrainte sera également satisfaite par la combinaison de contraintes arithmétiques et de comptage, à l'exception que l'inégalité se focalisera sur chaque valeur possible du domaine. La valeur limite du nombre maximum de participants par réseau, $P_f^{max,s}$, est là encore une donnée d'entrée de la forme d'onde. Formellement, soit f une forme d'onde et $S_f$ son ensemble de services alors $\forall d \in \mathsf{D}_s$, $\#\left\{ \bigcup_{r \in \mathsf{R}, s \in \mathsf{S}_f} x_{r,s} \mid x_{r,s} = d \right\} \leq P_f^{max,s}$ où d désigne un domaine.

Pour répondre au besoin initial de communications, le procédé va s'assurer que les radios souhaitant dialoguer ont un service en commun. Ainsi, pour chaque radio présente dans une bulle de communication, il faut trouver un service compatible avec les autres radios. Ceci se traduit par une contrainte arithmétique et de satisfaction booléenne (ou logique). En effet, parmi l'ensemble des services communs aux radios, il faut en trouver un qui est tel que leurs variables (restreintes aux radios concernées) auront la même valeur. Formellement, soit $R_{Col}$ l'ensemble des radios devant communiquer ensemble, alors la relation suivante doit être respectée :

$$\forall r_1, r_2 \in \mathsf{R}_{Col}, \exists f \in \mathsf{F}, \exists s \in \mathsf{S}_f \mid x_{r_1,s} = x_{r_2,s}$$

Une fois la résolution terminée, chaque variable s'est vue affecter une valeur.

La création des réseaux se fait maintenant par un post traitement. En effet, si $\exists r_1, r_2 \in \mathsf{R} \mid \forall f \in \mathsf{F}$, $\forall s \in S_f$, $\forall x_{r,s} \in \mathsf{R}$, $x_{r_1,s} = x_{r_2,s}$, alors ces deux radios $r_1, r_2$ interviennent au sein du même réseau avec le service s .

Si $\forall f \in F$, $\forall s \in S_f$, $\forall r \in R$, $\forall x_{r,s} \in X_f x_{r,s} = 0$, alors cela signifie que le service n'est pas mis en oeuvre.

De même si $\exists r \in R | \forall f \in F$, $\forall s \in S_f$, $\forall x_{r,s} \in R, x_{r,s} = 0$, alors cette radio r ne sera pas utilisée.

La solution peut être recherchée sans prendre en compte sa qualité. Selon une deuxième approche, il est aussi possible de rechercher une solution optimale se basant sur une fonction de coût de la solution définie. Cette deuxième approche permet notamment de prendre en compte la préférence d'un utilisateur pour les communications Très Haute Fréquence ou VHF sur les communications Ultra Haute Fréquence ou UHF, en attribuant par exemple un coût supérieur aux communications UHF. Une fois la solution trouvée, le dispositif maître détermine les interfaces radios et de réseaux pouvant être exploitées dans l'application donnée.

Afin de mieux faire comprendre l'invention, un exemple chiffré est donné à titre illustratif pour la création d'un réseau prenant en compte une forme d'onde, deux services et cinq radios.

Supposons que l'on ait une forme d'onde $F_1$ avec deux services, respectivement $S_{1,1}$ et $S_{1,2}$.

La forme d'onde $F_1$ a une limite de participants fixée à six,

Les services $S_{1,1}$ et $S_{1,2}$ ont des limites de participants par réseau respectivement de deux et de trois. De même pour ces deux services, au moins deux participants doivent intervenir par réseau,

Supposons que l'on dispose de cinq radios ($r_1$, $r_2$, $r_3$, $r_4$ et $r_5$).

Le besoin en communication est tel que : $r_1$ communique avec $r_2$ et que $r_3$, $r_4$, $r_5$ communiquent également ensemble, ce qui peut se représenter sous la forme du tableau suivant :

|       | $S_{1,1}$ | $S_{1,2}$ |
|-------|-----------|-----------|
| $r_1$ |           |           |
| $r_2$ |           |           |
| $r_3$ |           |           |
| $r_4$ |           |           |
| $r_5$ |           |           |

L'étape préliminaire d'appel au solveur de la programmation sous contrainte consiste à instancier les variables (et leur domaine). Il y aura 5*2=10 variables, à savoir :

$x(r_1, S_{1,1})$, $x(r_2, S_{1,1})$, $x(r_3, S_{1,1})$, $x(r_4, S_{1,1})$, $x(r_5, S_{1,1})$, $x(r_1, S_{1,2})$, $x(r_2, S_{1,2})$, $x(r_3, S_{1,2})$, $x(r_4, S_{1,2})$, $x(r_5, S_{1,2})$.

Le domaine des variables est lié aux services. Le service $S_{1,1}$ ne pourra pas engendrer plus de (nombre de participants pour la forme d'onde/ nombre de participants pour un service) 6/2 réseaux et $S_{1,2}$ ne pourra pas engendrer plus de 6/3 réseaux. Ainsi, il est possible de définir pour le service $S_{1,1}$ un domaine comprenant trois entiers, disons {1,2,3} et pour le service $S_{1,2}$ disons {4,5}. À ces ensembles, on rajoute la valeur 0 identifiant la non utilisation du service.

| Variables | Domaines |
|-----------|----------|
| $x(r_1, S_{1,1})$ | {0,1,2,3} |
| $x(r_2, S_{1,1})$ | {0,1,2,3} |
| $x(r_3, S_{1,1})$ | {0,1,2,3} |
| $x(r_4, S_{1,1})$ | {0,1,2,3} |
| $x(r_5, S_{1,1})$ | {0,1,2,3} |
| $x(r_1, S_{1,2})$ | {0,4,5} |
| $x(r_2, S_{1,2})$ | {0} // car le service n'est pas compatible avec la radio |
| $x(r_3, S_{1,2})$ | {0,4,5} |
| $x(r_4, S_{1,2})$ | {0,4,5} |
| $x(r_5, S_{1,2})$. | {0,4,5} |

Les données sont ainsi envoyées au solveur.

Suite à l'appel du solveur, c'est-à-dire une fois la résolution terminée en application de la programmation par contraintes connue de l'homme du métier, les variables se sont vues affecter les valeurs suivantes :

| Variables | Valeur |
|---|---|
| $x(r_1, S_{1,1})$ | 1 |
| $x(r_2, S_{1,1})$ | 1 |
| $x(r_3, S_{1,1})$ | 2 |
| $x(r_4, S_{1,1})$ | 2 |
| $x(r_5, S_{1,1})$ | 2 |
| $x(r_1, S_{1,2})$ | 0 |
| $x(r_2, S_{1,2})$ | 0 |
| $x(r_3, S_{1,2})$ | 0 |
| $x(r_4, S_{1,2})$ | 0 |
| $x(r_5, S_{1,2})$. | 0 |

Post traitement : cela signifie que le besoin en communications entre ($r_1$, $r_2$) et entre ($r_3$, $r_4$, $r_5$) se traduit par la création de deux réseaux utilisant le service $S_{1,1}$.

Ces données sont ensuite utilisées pour programmer chacune des radios retenues pour la configuration de réseau.

Le solveur aurait très bien pu donner le résultat ci-dessous qui engendrerait la création de deux réseaux. ($r_1$, $r_2$) et ($r_3$, $r_4$, $r_5$) utiliseraient respectivement le service $S_{1,1}$ et $S_{1,2}$ :

| Variables | Valeur |
|---|---|
| $x(r_1, S_{1,1})$ | 1 |
| $x(r_2, S_{1,1})$ | 1 |
| $x(r_3, S_{1,1})$ | 0 |
| $x(r_4, S_{1,1})$ | 0 |
| $x(r_5, S_{1,1})$ | 0 |
| $x(r_1, S_{1,2})$ | 0 |
| $x(r_2, S_{1,2})$ | 0 |
| $x(r_3, S_{1,2})$ | 4 |
| $x(r_4, S_{1,2})$ | 4 |
| $x(r_5, S_{1,2})$. | 4 |

On intègre maintenant une nouvelle forme d'onde $F_2$ apportant un service $S_{2,1}$. Les caractéristiques sont :

- $F_2$ accepte un maximum de quatre participants,
- $S_{2,1}$ aura exactement deux participants par réseau.

On ajoute à l'exemple précédent deux nouvelles radios ($r_6$ et $r_7$) devant communiquer ensemble.
Le tableau de compatibilité est le suivant :

|  | $S_{1,1}$ | $S_{1,2}$ | $S_{2,1}$ |
|---|---|---|---|
| $r_1$ |  |  |  |
| $r_2$ |  |  |  |
| $r_3$ |  |  |  |
| $r_4$ |  |  |  |

(suite)

|     | $S_{1,1}$ | $S_{1,2}$ | $S_{2,1}$ |
| --- | --- | --- | --- |
| $r_5$ |  |  |  |
| $r_6$ |  |  |  |
| $r_7$ |  |  |  |

Le service $S_{2,1}$ permet la création de 4/2 réseaux. Ainsi le domaine de $S_{2,1}$ peut se définir comme {0,6,7}. Avant d'appeler le solveur, il va falloir créer 1*5+3*2 variables par rapport au problème précédent, à savoir :

| Variables | Domaines |
| --- | --- |
| $x(r_1, S_{1,1})$ | {0,1,2,3} |
| $x(r_2, S_{1,1})$ | {0,1,2,3} |
| $x(r_3, S_{1,1})$ | {0,1,2,3} |
| $x(r_4, S_{1,1})$ | {0,1,2,3} |
| $x(r_5, S_{1,1})$ | {0,1,2,3} |
| $x(r_6, S_{1,1})$ | {0,1,2,3} |
| $x(r_7, S_{1,1})$ | {0,1,2,3} |
| $x(r_1, S_{1,2})$ | {0,4,5} |
| $x(r_2, S_{1,2})$ | {0} // car le service n'est pas compatible avec la radio |
| $x(r_3, S_{1,2})$ | {0,4,5} |
| $x(r_4, S_{1,2})$ | {0,4,5} |
| $x(r_5, S_{1,2})$ | {0,4,5} |
| $x(r_6, S_{1,2})$ | {0,4,5} |
| $x(r_7, S_{1,2})$ | {0,4,5} |
| $x(r_1, S_{2,1})$ | {0,6,7} |
| $x(r_2, S_{2,1})$. | {0} |
| $x(r_3, S_{2,1})$ | {0,6,7} |
| $x(r_4, S_{2,1})$ | {0,6,7} |
| $x(r_5, S_{2,1})$ | {0,6,7} |
| $x(r_6, S_{2,1})$ | {0,6,7} |
| $x(r_7, S_{2,1})$ | {0,6,7} |

L'appel au solveur peut donner le résultat suivant :

| Variables | Valeur |
| --- | --- |
| $x(r_1, S_{1,1})$ | 1 |
| $x(r_2, S_{1,1})$ | 1 |
| $x(r_3, S_{1,1})$ | 0 |
| $x(r_4, S_{1,1})$ | 0 |
| $x(r_5, S_{1,1})$ | 0 |
| $x(r_6, S_{1,1})$ | 0 |

(suite)

| Variables | Valeur |
|---|---|
| $x(r_7, S_{1,1})$ | 0 |
| $x(r_1, S_{1,2})$ | 0 |
| $x(r_2, S_{1,2})$ | 0 |
| $x(r_3, S_{1,2})$ | 4 |
| $x(r_4, S_{1,2})$ | 4 |
| $x(r_5, S_{1,2})$ | 4 |
| $x(r_6, S_{1,2})$ | 0 |
| $x(r_7, S_{1,2})$ | 0 |
| $x(r_1, S_{2,1})$ | 0 |
| $x(r_2, S_{2,1})$. | 0 |
| $x(r_3, S_{2,1})$ | 0 |
| $x(r_4, S_{2,1})$ | 0 |
| $x(r_5, S_{2,1})$ | 0 |
| $x(r_6, S_{2,1})$ | 6 |
| $x(r_7, S_{2,1})$ | 6 |

Par post traitement, on en déduit donc que $(r_1, r_2)$ communiquent sur un réseau du service $S_{1,1}$, que $(r_3, r_4, r_5)$ communiquent sur un réseau du service $S_{1,2}$ et que $(r_6, r_7)$ communiquent sur un réseau du service $S_{2,1}$. Ces données sont ensuite utilisées pour programmer chacune des radios retenues pour définir une configuration de réseau qui permet de satisfaire des besoins de communication pour une application donnée.

Une autre solution potentiellement trouvable par le solveur est celle-ci :

| Variables | Valeur |
|---|---|
| $x(r_1, S_{1,1})$ | 1 |
| $x(r_2, S_{1,1})$ | 1 |
| $x(r_3, S_{1,1})$ | 0 |
| $x(r_4, S_{1,1})$ | 0 |
| $x(r_5, S_{1,1})$ | 0 |
| $x(r_6, S_{1,1})$ | 2 |
| $x(r_7, S_{1,1})$ | 2 |
| $x(r_1, S_{1,2})$ | 0 |
| $x(r_2, S_{1,2})$ | 0 |
| $x(r_3, S_{1,2})$ | 5 |
| $x(r_4, S_{1,2})$ | 5 |
| $x(r_5, S_{1,2})$ | 5 |
| $x(r_6, S_{1,2})$ | 0 |
| $x(r_7, S_{1,2})$ | 0 |
| $x(r_1, S_{2,1})$ | 0 |
| $x(r_2, S_{2,1})$. | 0 |
| $x(r_3, S_{2,1})$ | 0 |

(suite)

| Variables | Valeur |
|---|---|
| $x(r_4, S_{2,1})$ | 0 |
| $x(r_5, S_{2,1})$ | 0 |
| $x(r_6, S_{2,1})$ | 0 |
| $x(r_7, S_{2,1})$ | 0 |

Sur l'exemple précédent, il n'est pas possible de fournir le besoin en communication avec le service $S_{1,1}$. En effet, la forme d'onde $F_1$ empêche d'avoir plus de six participants. Autrement dit l'affectation suivante est impossible :

| Variables | Valeur |
|---|---|
| $x(r_1, S_{1,1})$ | 1 |
| $x(r_2, S_{1,1})$ | 1 |
| $x(r_3, S_{1,1})$ | 2 |
| $x(r_4, S_{1,1})$ | 2 |
| $x(r_5, S_{1,1})$ | 2 |
| $x(r_6, S_{1,1})$ | 3 |
| $x(r_7, S_{1,1})$ | 3 |
| $x(r_1, S_{1,2})$ | 0 |
| $x(r_2, S_{1,2})$ | 0 |
| $x(r_3, S_{1,2})$ | 0 |
| $x(r_4, S_{1,2})$ | 0 |
| $x(r_5, S_{1,2})$ | 0 |
| $x(r_6, S_{1,2})$ | 0 |
| $x(r_7, S_{1,2})$ | 0 |
| $x(r_1, S_{2,1})$ | 0 |
| $x(r_2, S_{2,1})$. | 0 |
| $x(r_3, S_{2,1})$ | 0 |
| $x(r_4, S_{2,1})$ | 0 |
| $x(r_5, S_{2,1})$ | 0 |
| $x(r_6, S_{2,1})$ | 0 |
| $x(r_7, S_{2,1})$ | 0 |

De même, il est impossible de fournir le besoin en communication de $(r_3, r_4, r_5)$ avec le service $S_{2,1}$ car celui-ci doit avoir exactement deux participants. Autrement dit l'affectation suivante est interdite :

| Variables | Valeur |
|---|---|
| $x(r_1, S_{1,1})$ | 1 |
| $x(r_2, S_{1,1})$ | 1 |
| $x(r_3, S_{1,1})$ | 0 |
| $x(r_4, S_{1,1})$ | 0 |
| $x(r_5, S_{1,1})$ | 0 |

(suite)

| Variables | Valeur |
|---|---|
| $x(r_6, S_{1,1})$ | 3 |
| $x(r_7, S_{1,1})$ | 3 |
| $x(r_1, S_{1,2})$ | 0 |
| $x(r_2, S_{1,2})$ | 0 |
| $x(r_3, S_{1,2})$ | 0 |
| $x(r_4, S_{1,2})$ | 0 |
| $x(r_5, S_{1,2})$ | 0 |
| $x(r_6, S_{1,2})$ | 0 |
| $x(r_7, S_{1,2})$ | 0 |
| $x(r_1, S_{2,1})$ | 0 |
| $x(r_2, S_{2,1})$. | 0 |
| $x(r_3, S_{2,1})$ | 6 |
| $x(r_4, S_{2,1})$ | 6 |
| $x(r_5, S_{2,1})$ | 6 |
| $x(r_6, S_{2,1})$ | 0 |
| $x(r_7, S_{2,1})$ | 0 |

L'invention permet notamment d'offrir une interface standard qui permet de prendre en compte des contraintes propres à de nouvelles formes d'ondes ou équipement qui n'étaient pas connus à l'initialisation du système. Cette prise en compte ne requiert pas la connaissance des caractéristiques de ces nouvelles formes d'ondes ou d'équipements, ce qui préserve la confidentialité des informations.

**Revendications**

1. Procédé pour définir une topologie de réseaux utilisant plusieurs postes radios, lesdits postes radios communicant via un canal de communication, **caractérisé en ce que** l'on définit des besoins en communication (31), chaque forme d'onde transmet ses contraintes via une interface (32), lesdites contraintes sont transformées en valeurs numériques et transmises à un solveur de contraintes implémenté au niveau d'un processeur, ledit solveur de contraintes prend en compte l'ensemble des radios disponibles, l'ensemble des formes d'ondes disponibles, et l'ensemble des services pour une forme d'onde, et parcourt un arbre de solutions afin de définir une topologie de réseau comprenant un ensemble de postes radios satisfaisant les besoins en communication et des paramètres de fonctionnement pour chacun desdits postes, lesdits paramètres de fonctionnement étant transmis vers les postes radios afin de permettre la programmation desdits postes.

2. Procédé selon la revendication 1 **caractérisé en ce qu'**il prend en compte les besoins en communication, la capacité pour chacun des postes radios du réseau, lesdites valeurs étant transformées en valeurs numériques, ledit solveur parcourant un arbre de solution en termes de réseaux d'allocation de postes et s'arrêtant dès qu'une solution satisfaisant les contraintes données est trouvée.

3. Procédé selon la revendication 2 **caractérisé en ce qu'**il comporte au moins les étapes suivantes :

   R représentant l'ensemble des radios disponibles, F l'ensemble des formes d'ondes disponibles, $S_f$ l'ensemble des services pour une forme d'onde,
   soit X l'ensemble des variables des problèmes, contenant les services susceptibles d'être activés pour une radio r, avec $x_{r,s} \in X$, correspondant à l'activation d'un service s d'une radio r et un service est lié à une unique forme d'onde $f$,

on segmente l'ensemble des variables X sur l'ensemble des formes d'ondes de la manière suivante :

$$X = \bigcup_{f \in F} X_f,$$

sur réception d'une nouvelle forme d'onde à prendre en compte, l'ensemble X s'exprime de la manière suivante :

$$X = X_{f_{nouvelle}} \cup \bigcup_{f \in F} X_f \ .$$

On prend en compte $P_f^{max,f}$ le maximum de radios par forme d'onde, s'exprimant sous la forme

$$\#\{\bigcup_{r \in R, s \in S_f} x_{r,s} \mid x_{r,s} \neq 0\} \leq P_f^{max,f},$$ $S_f$ l'ensemble de services pour une forme d'onde.

On prend en compte le nombre maximum de radios par réseau

$$\forall d \in D_s, \#\{\bigcup_{r \in R, s \in S_f} x_{r,s} \mid x_{r,s} = d\} \leq P_f^{max,s},$$

Soit $R_{CoI}$ l'ensemble des radios devant communiquer ensemble, on utilise la relation:

$$\forall r_1, r_2 \in R_{CoI}, \exists f \in F, \exists s \in S_f \mid x_{r_1,s} = x_{r_2,s}$$

Le solveur utilise ces relations et génère la topologie de réseau de la manière suivante:

si $\exists r_1, r_2 \in R \mid \forall f \in F, \forall s \in S_f, \forall x_{r,s} \in R, x_{r1,s} = x_{r2,s}$, alors ces deux radios interviennent au sein du même réseau avec le service s,
Si $\forall f \in F, \forall s \in S_f, \forall r \in R, \forall x_{r,s} \in X_f, x_{r,s}=0$, le service n'est pas mis en oeuvre.
Si $\exists r \in R \mid \forall f \in F, \forall s \in S_f, \forall x_{r,s} \in R, x_{r,s} =0$, la radio $r$ ne sera pas utilisée.

4. Procédé selon l'une des revendications précédentes **caractérisé en ce que** le solveur de contraintes parcourt l'arbre de solution pendant un intervalle de temps limité.

5. Procédé selon l'une des revendications précédentes **caractérisé en ce qu'**il prend en compte des fichiers de personnalisation permettant de prendre en charge une préférence pour des domaines de fréquence de fonctionnement, par exemple très haute fréquence ou ultra haute fréquence.

6. Système permettant de générer un réseau comportant plusieurs stations radios configurées en utilisant les paramètres de fonctionnement obtenus par la mise en œuvre du procédé selon l'une des revendications 1 à 5.

7. Système selon la revendication 6 **caractérisé en ce qu'**il comporte un dispositif décentralisé comprenant un processeur (22) programmé pour exécuter les étapes du procédé selon l'invention, l'exécution d'un solveur de contraintes implémenté sur le processeur prenant en entrée un ensemble de données, une base de données (23) se présentant sous la forme d'une matrice exprimant les besoins en communication, les lignes de la matrice représentant les interfaces des radios et les colonnes des services disponibles pour l'ensemble des radios du système, une radio comprenant des moyens de communication (11i) et une interface (12i) apte à recevoir les paramètres de configuration en fonction des paramètres générés par le dispositif décentralisé.

**Patentansprüche**

1. Verfahren zur Definition einer Netzwerktopologie, welche mehrere Rundfunkgeräte verwendet, wobei die Rundfunkgeräte über einen Kommunikationskanal kommunizieren, **dadurch gekennzeichnet, dass** man die Kommunikationsbedarfe (31) definiert, wobei jede Wellenform ihre Vorgaben über eine Schnittstelle (32) überträgt, wobei die Vorgaben in numerische Werte umgewandelt und an einen Vorgabenlöser übertragen werden, welcher auf einem Prozessor implementiert ist, wobei der Vorgabenlöser sämtliche verfügbaren Funkgeräte, sämtliche verfügbaren Wellenformen und sämtliche Dienste für eine Wellenform berücksichtigt und einen Lösungsbaum durchläuft, um eine Netzwerktopologie zu definieren, welche eine Gruppe von Rundfunkgeräten umfasst, welche die Kommunikationsbedarfe und Betriebsparameter für jedes der Geräte erfüllt, wobei die Betriebsparameter an die Rundfunkgeräte übertragen werden, um die Programmierung der Geräte zu ermöglichen.

2. Verfahren nach Anspruch 1, **dadurch gekennzeichnet, dass** es die Kommunikationsbedarfe, die Kapazität für jedes der Rundfunkgeräte des Netzwerks berücksichtigt, wobei die Werte in numerische Werte umgewandelt werden, wobei der Löser einen Lösungsbaum bezüglich Zuweisungs-Netzwerken für die Geräte durchläuft und stoppt, sobald eine die vorgegebenen Vorgaben erfüllende Lösung gefunden wird.

3. Verfahren nach Anspruch 2, **dadurch gekennzeichnet, dass** es mindestens folgende Schritte umfasst:

wenn R die Gruppe der verfügbaren Funkgeräte darstellt, F die Gruppe der verfügbaren Wellenformen, $S_f$ die Gruppe der Dienste für eine Wellenform, sei X die Gruppe der Variablen der Aufgaben, beinhaltend die für ein Funkgerät r aktivierbaren Dienste, wobei $x_{r,s} \in X$, welche der Aktivierung eines Dienstes s eines Funkgerätes r entsprechen, und wobei ein Dienst mit einer einzigen Wellenform $f$ verbunden ist,

die Gruppe der Variablen X wird über die Gruppe der Wellenformen wie folgt segmentiert: $X = \bigcup_{f \in F} X_f$,

bei Empfang einer neuen zu berücksichtigenden Wellenform wird die Gruppe X wie folgt ausgedrückt:

$$X = X_{f_{neu}} \cup \bigcup_{f \in F} X_f .$$

man berücksichtigt $P_f^{max,f}$, das Maximum an Funkgeräten pro Wellenform, ausgedrückt in der Form

$$\#\{\bigcup_{r \in R, s \in S_f} x_{r,s} \mid x_{r,s} \neq 0\} \leq P_f^{max,f},$$ mit $S_f$ der Gruppe der Dienste für eine Wellenform.

man berücksichtigt die maximale Anzahl an Funkgeräten pro Netzwerk.

$$\forall d \in D_s, \#\{\bigcup_{r \in R, s \in S_f} x_{r,s} \mid x_{r,s} = d\} \leq P_f^{max,s}$$

sei $R_{Col}$ die Gruppe der Funkgeräte, die miteinander kommunizieren sollen, dann verwendet man folgende Beziehung:

$$\forall r_1, r_2 \in R_{Col}, \exists f \in F, \exists s \in S_f \mid x_{r_1,s} = x_{r_2,s} .$$

der Löser verwendet diese Beziehungen und erzeugt die Netzwerktopologie wie folgt:

wenn $\exists r_1, r_2 \in R \mid \forall f \in F, \forall s \in S_f, \forall x_{r,s} \in R, x_{r_1,s} = x_{r_2,s}$, dann sind diese beiden Funkgeräte innerhalb desselben Netzwerks mit dem Dienst s aktiv,
wenn $\forall f \in F, \forall s \in S_f, \forall r \in R, \forall x_{r,s} \in X_f\, x_{r,s}=0$, wird der Dienst nicht umgesetzt.
wenn $\exists r \in R \mid \forall f \in F, \forall s \in S_f, \forall x_{r,s} \in R, x_{r,s}=0$, wird das Funkgerät r nicht verwendet.

4. Verfahren nach einem der vorhergehenden Ansprüche, **dadurch gekennzeichnet, dass** der Vorgabenlöser den Lösungsbaum während eines begrenzten Zeitintervalls durchläuft.

5. Verfahren nach einem der vorhergehenden Ansprüche, **dadurch gekennzeichnet, dass** es Personalisierungsdateien berücksichtigt, was dazu dient, eine Präferenz für Betriebsfrequenzbereiche zu unterstützen, beispielsweise sehr hohe Frequenz oder ultrahohe Frequenz.

6. System zum Erzeugen eines Netzwerks, welches mehrere Radiosenderumfasst, welche unter Verwendung von Betriebsparametern konfiguriert werden, welche durch die Umsetzung des Verfahrens nach einem der Ansprüche 1 bis 5 erzielt werden.

7. System nach Anspruch 6, **dadurch gekennzeichnet, dass** es eine dezentralisierte Vorrichtung umfasst, welche einen Prozessor (22) umfasst, welcher programmiert ist, um die Schritte des erfindungsgemäßen Verfahrens auszuführen, wobei die Ausführung eines Vorgabenlösers, welcher an dem Prozessor implementiert ist, am Eingang eine Gruppe von Daten nimmt, wobei sich eine Datenbank (23) in Form einer Matrix dargestellt, welche die Kommunikationsbedarfe ausdrückt, wobei die Zeilen der Matrix die Schnittstellen der Funkgeräte darstellen und die Spalten für sämtliche Funkgeräte des Systems verfügbaren Dienste, wobei ein Funkgerät Kommunikationsmittel (11i) und eine Schnittstelle (12i) umfasst, welche in der Lage ist, die Konfigurationsparameter entsprechend den durch die dezentralisierte Vorrichtung erzeugten Parametern zu empfangen.

## Claims

1. Method for defining a topology of networks using several radio posts, the said radio posts communicating via a communication channel, **characterized in that** communications requirements (31) are defined, each waveform transmitting its constraints via an interface (32), the said constraints being transformed into numerical values and transmitted to a constraint solver implemented on a processor, the said constraint solver taking into account all available radios, all available waveforms, and all available services for a waveform, and scanning a solution tree so as to define a topology of networks comprising a set of radio posts satisfying the communications requirements and operating parameters for each of the said posts, the said operating parameters being transmitted to the radio posts so as to allow the programming of the said posts.

2. Method according to claim 1, **characterized in that** it takes into account the communications requirements, the capacity for each of the radio posts of the network, the said values being transformed into numerical values, the said solver scanning a solution tree in terms of networks for allocating posts and stopping as soon as a solution satisfying the given constraints is found.

3. Method according to claim 2, **characterized in that** it comprises at least the following steps:

   R representing the set of available radios, F the set of available waveforms, $S_f$ the set of services for a waveform, let X be the set of variables of the problems, containing the services able to be activated for a radio r, with $x_{r,s} \in X$, corresponding to the activation of a service s of a radio r and a service being linked with a single waveform $f$,

   the set of variables X is segmented over the set of waveforms in the following manner: $X = \bigcup_{f \in F} X_f$,

   on receipt of a new waveform to be taken into account, the set X is expressed in the following manner:

   $$X = X_{f_{new}} \cup \bigcup_{f \in F} X_f,$$

   account is taken of $P_f^{max,f}$, the maximum of radios per waveform, expressed under the form

   $$\#\{\bigcup_{r \in R, s \in S_f} x_{r,s} \mid x_{r,s} \neq 0\} \leq P_f^{max,f},$$ $S_f$ the set of services for a waveform,

   account is taken of the maximum number of radios per network

   $$\forall d \in D_s, \#\{\bigcup_{r \in R, s \in S_f} x_{r,s} \mid x_{r,s} = d\} \leq P_f^{max,s},$$

   let $R_{Col}$ be the set of radios having to communicate together, the following relation is used:

   $$\forall r_1, r_2 \in R_{Col}, \exists f \in F, \exists s \in S_f \mid x_{r_1,s} = x_{r_2,s},$$

   the solver uses these relations and generates the network topology in the following manner:

   if $\exists r_1, r_2 \in R \mid \forall f \in F, \forall s \in S_f, \forall x_{r,s} \in R, x_{r_1,s} = x_{r_2,s}$, then these two radios are active within the same network with the service s,
   if $\forall f \in F, \forall s \in S_f, \forall r \in R, \forall x_{r,s} \in X_f, x_{r,s} = 0$, the service is not implemented,
   if $\exists r \in R \mid \forall f \in F, \forall s \in S_f, \forall x_{r,s} \in R, x_{r,s} = 0$, the radio $r$ will not be used.

4. Method according to one of the preceding claims, **characterized in that** the constraint solver scans the solution tree during a limited time interval.

5. Method according to one of the preceding claims, **characterized in that** it takes into account personalization files, making it possible to support a preference for operating frequency domains, for example very high frequency or ultra-high frequency.

6. System making it possible to generate a network comprising several radio stations configured using the operating parameters obtained by implementing the method according to one of claims 1 to 5.

7. System according to Claim 6, **characterized in that** it comprises a decentralized device comprising a processor (22) programmed to execute the steps of the method according to the invention, the execution of a constraint solver implemented on the processor taking as input a data set, a database (23) exhibiting the form of a matrix expressing the communications requirements, the rows of the matrix representing the interfaces of the radios and the columns services available for the set of radios of the system, a radio comprising communication means (11i) and an interface (12i) which is able to receive the configuration parameters as a function of the parameters generated by the decentralized device.

FIG.1

FIG.2

**EP 3 503 611 B1**

## RÉFÉRENCES CITÉES DANS LA DESCRIPTION

**Documents brevets cités dans la description**

- US 2017310550 A